# EUROPÄISCHE PATENTSCHRIFT

(11) **EP 4 649 547 B1**
(45) Veröffentlichungstag und Bekanntmachung des Hinweises auf die Patenterteilung: **04.11.2026**
(21) Anmeldenummer: 24712730.1
(22) Anmeldetag: 15.02.2024
(51) Int. Cl.: H01M 50/367, H01M 50/30, H01M 50/40

(54) **BATTERIESPEICHERVORRICHTUNG MIT ENTLÜFTUNG**
BATTERY STORAGE DEVICE WITH VENTILATION
DISPOSITIF DE STOCKAGE DE BATTERIE AVEC ÉVENT

(30) Priorität: 16.02.2023 AT 501032023
(43) Veröffentlichungstag der Anmeldung: 19.11.2025
(73) Patentinhaber: AVL List GmbH, 8020 Graz (AT); LG Energy Solution Ltd., Seoul 07335 (KR)
(72) Erfinder: SIFFERLINGER, Bernhard, 8041 Graz (AT); ERKER, Simon, 8045 Graz (AT); BRUNNSTEINER, Bernhard, 8052 Graz (AT); MACHERHAMMER, Roland, 8020 Graz (AT); AUFDERKLAMM, Karl, 8101 Gratkorn (AT); HANDL, Matthias Peter, 8020 Graz (AT); JUNG, Seyun, 78 Seoul Seoul 06039 (KR); LEE, Inje, Suwon-si 232 Gyeonggi-do Gyeonggi-do 16698 (KR); SEO, Sungwon, 16 Seoul Seoul 05779 (KR); KANG, Jongmo, Daejeon 34122 (KR); HWANG, Taewon, Daejeon 34122 (KR)
(74) Vertreter: Plasseraud IP
(86) Internationale Anmeldenummer: PCT/AT2024/060051
(87) Internationale Veröffentlichungsnummer: WO 2024/168368

(56) Entgegenhaltungen:
- DE-A1- 102021 116 122
- DE-A1- 102021 120 336
- DE-A1- 102021 208 346

## Beschreibung

Die vorliegende Erfindung betrifft eine Batteriespeichervorrichtung mit definierten Gasabführungswegen zur Entlüftung einer Ausgasung aus thermisch überlasteten Batteriezellen.

Die Batteriespeichervorrichtung findet Anwendung als modular aufgebauter Batteriespeicher aus Speichermodulen, wie er beispielsweise in mobilen Anwendungen als Traktionsbatterie in einem Fahrzeug eingesetzt wird.

Es sind modulare Batteriespeicher bekannt, die eine hohe Energiedichte aufweisen und besondere Sicherheitsmerkmale benötigen, um im Falle eines thermischen Durchgehens, d.h. einem thermal Runaway, wie er bei einigen brennbaren Aktivmaterialien von Lithium-Ionen Batterien auftreten kann, eine ausbreitende Kettenreaktion unter den Batteriezellen so gut wie möglich zu vermeiden. Zu diesen Sicherheitsmerkmalen zählt unter anderem eine Entlüftung, durch die heiße Abgase und deren thermische Last möglichst kontrolliert nach außen abgeführt werden können.

Wenn sich der Batteriespeicher an Bord eines Fahrzeugs, insbesondere in unmittelbarer Nähe zu einem Fahrgastraum befindet, bestehen zudem weitere Sicherheitsbestimmungen bezüglich einer zulässigen thermischen Last, welche in begrenztem Maße durch Abgas in dem System umfeld des Fahrzeugs abgeführt werden, wie insbesondere eine maximale Temperatur oder die Vermeidung von Funkenflug durch glühenden Partikeln, an denen sich Gase entzünden können.

Andererseits besteht im Fahrzeugbau stets das Bestreben nach Raum-, Gewichts- und Kostenoptimierung, welche die Gestaltungsfreiheit zu konstruktiven Lösungsansätzen, die der genannten, sicherheitsrelevanten Behandlung von Ausgasungen und Abwärme bei thermisch kritischen Vorfällen, begrenzen. Demnach besteht prinzipiell Bedarf an einem Design zur Verbesserung eines thermischen Verhaltens von Batteriespeichern.

Eine Aufgabe der Erfindung besteht darin, eine Ausbreitung kritischer Temperaturen auf benachbarte Batteriezellen in dem Batteriespeicher und eine mögliche thermische Kettenreaktion unter den Batteriezellen durch konstruktive Merkmale so gut wie möglich zu unterdrücken.

Für den Anwendungsfall des Batteriespeichers in einem Fahrzeug besteht ferner eine übergeordnete Aufgabe der Erfindung darin, die Sicherheit von Fahrgästen bei einer Entlüftung von Ausgasungen aus thermisch überlasteten Batteriezellen in dem Batteriespeicher zu verbessern.

DE 10 2021 208346 A1 and DE 10 2021 116122 A1 betreffen Beispiele aus dem Stand der Technik.

Die voranstehende Aufgabe wird gelöst durch eine Batteriespeichervorrichtung mit den Merkmalen des Anspruchs 1. Weitere Merkmale und Details der Erfindung ergeben sich aus den Unteransprüchen, der Beschreibung und den Zeichnungen.

Die erfindungsgemäße Batteriespeichervorrichtung umfasst ein Gehäuse mit einem Zellenaufnahmeabschnitt zur Aufnahme einer Mehrzahl von Batteriezellen, einem Gasabführabschnitt zum Abführen einer Ausgasung aus den Batteriezellen über definierte Strömungswege, einer Abschnittstrennwand mit Gasdurchlassöffnungen horizontal angeordnet zur Abgrenzung zwischen dem Zellenaufnahmeabschnitt und dem Gasabführabschnitt, wobei die Abschnittstrennwand durch die Gasdurchlassöffnungen gasundurchlässig und im übrigen gasundurchlässig ist, und einem Gasauslass, der durch das Gehäuse hindurch zu einer Außenseite führt, zum Auslassen der Ausgasung von einer Innenseite des Gehäuses zur Außenseite des Gehäuses. Erfindungsgemäß weist der Zellenaufnahmeabschnitt des Gehäuses mehrere mittels mindestens einer Kammertrennwand gasundurchlässig unterteilte Aufnahmekammern, in denen eine einzelne Batteriezelle oder eine Gruppe von mehreren Batteriezellen aufgenommen ist, auf; und der Gasabführabschnitt des Gehäuses weist mehrere zumindest teilweise mittels mindestens einer Kanaltrennwand gasundurchlässig unterteilte Abführkanäle, die jeweils mit einer zugeordneten Aufnahmekammer in einer Fluidverbindung stehen und einen, zumindest abschnittsweise, separaten Strömungsweg ausbilden, auf. In vorteilhafter Weise steht genau eine Aufnahmekammer mit einem Abführkanal in Fluidverbindung, sodass Wärme aus einer Aufnahmekammer nicht durch den Abführkanal an eine andere Aufnahmekammer übertragen werden kann.

Die Erfindung sieht somit erstmals eine Aufnahme einzelner Batteriezellen oder einzelner Gruppen von Batteriezellen in voneinander abgetrennten Gehäuseabschnitten, insbesondere Aufnahmekammern in Kombination mit getrennt zugeordneten Abführkanälen zur separaten Entlüftung des Volumens der separaten Gehäuseabschnitte vor.

Als ein großer Vorteil der Erfindung wird eine thermische Last, die in einem Abgas aus einer einzelnen Batteriezelle oder aus einer zumindest begrenzten kleinen Anzahl von Batteriezellen einer Gruppe enthalten ist, gerichtet abgeführt, und zwar getrennt von einem Volumen oder einer Entlüftungsschnittstelle eines benachbarten Gehäuseabschnitts oder Aufnahmekammer, in dem die nächstgelegen angeordneten Batteriezellen aufgenommen sind.

Somit kann eine Ausbreitung der thermischen Last des Abgases auf benachbarte Batteriezellen über eine Fluidverbindung zwischen denselben sowohl im Bereich einer Zellenaufnahme als auch im Bereich einer Entlüftungsableitung im direkten Umfeld verhindert werden.

Gemäß einem vorteilhaften Aspekt der Erfindung können die mindestens eine Kammertrennwand und/oder die mindestens eine Kanaltrennwand orthogonal zu der Abschnittstrennwand zu einer mittels Gasdurchlassöffnungen gasdurchlässigen Unterteilung des Gehäuses zwischen dem Zellenaufnahmeabschnitt und dem Gasabführabschnitt verlaufen. Dadurch kann über eine Flächenausbreitung eines modularen Batteriespeichers und über alle Batteriemodule verteilt eine gleichförmige und regelmäßige Kanalstruktur mit redundant gefertigten Bauteilen und gleichem Strömungsverhalten zur Entlüftung verwendet werden.

Gemäß einem vorteilhaften Aspekt der Erfindung können die Abschnittstrennwand mit Gasdurchlassöffnungen zur gasdurchlässige Unterteilung zwischen dem Zellenaufnahmeabschnitt und dem Gasabführabschnitt im Wesentlichen horizontal in dem Gehäuse verläuft, und die mindestens eine Kammertrennwand und/oder die mindestens eine Kanaltrennwand im Wesentlichen vertikal in dem Gehäuse verlaufen. Dadurch wird das Design des Gehäuses in Bezug auf eine gleichförmige und regelmäßige Kanalstruktur mit redundant gefertigten Bauteilen und gleichem Strömungsverhalten zur Entlüftung weiter vereinfacht.

Gemäß einem darauf aufbauenden, vorteilhaften Aspekt der Erfindung kann der Zellenaufnahmeabschnitt über der Abschnittstrennwand mit Gasdurchlassöffnungen zur gasdurchlässigen Unterteilung und der Gasabführabschnitt unter der Abschnittstrennwand mit Gasdurchlassöffnungen zur gasdurchlässigen Unterteilung angeordnet sein.

Durch diese relative Anordnung der Gehäuseabschnitte zueinander ergeben sich anwendungsbezogene Vorteile im Zusammenhang mit dem Systemumfeld, insbesondere einer Anordnung des Batteriespeichers in einem Fahrzeugboden.

So sind die Batteriezellen weniger zu potenziellen schädlichen Einwirkungen an einem Unterboden des Fahrzeugs exponiert, und eine Entlüftung von heißen Gasen ist weiter von einer darüber liegenden Fahrgastzelle entfernt.

Gemäß einem vorteilhaften Aspekt der Erfindung können die Gasdurchlassöffnungen in der Abschnittstrennwand jeweils separate Fluidverbindungen zwischen einer Aufnahmekammern und einem Abführkanal bilden. So wird auf konstruktiv einfache Weise eine strukturelle Begrenzung und Aufnahme der Batteriezellen im Gehäuse ohne Abtrennung des Aufnahmevolumens bereitgestellt.

Gemäß einem vorteilhaften Aspekt der Erfindung können die Kammertrennwände zur gasundurchlässigen Unterteilung zwischen den Aufnahmekammern des Zellenaufnahmeabschnitts parallel zu einer Längserstreckung der Batteriezellen, also der längeren Erstreckung der Batteriezellen, verlaufen. So wird auf konstruktiv einfache Weise eine strukturelle Begrenzung und Aufnahme der Batteriezellen im Gehäuse unter Abtrennung von benachbarten Aufnahmevolumen bereitgestellt.

Gemäß einem vorteilhaften Aspekt der Erfindung können die Kanaltrennwände zur zumindest teilweise gasundurchlässigen Unterteilung zwischen den Abführkanälen des Gasabführabschnitts in denselben Abständen wie die Kanaltrennwände zwischen den Aufnahmekammern angeordnet sein und insbesondere in zumindest einer Richtung parallel zu diesen verlaufen. So wird auf konstruktiv einfache Weise eine strukturelle Begrenzung zwischen benachbarten Abführkanälen im Gehäuse bereitgestellt, welche der separaten Entlüftung von benachbarten Aufnahmevolumen in deren Abständen zugeordnet ist.

Gemäß einem vorteilhaften Aspekt der Erfindung können mehrere benachbarte Kanaltrennwände zwischen den Abführkanälen durch ein gemeinsames Flächenelement mit einem mäanderförmigen Querschnitt der Abführkanäle integral gebildet werden. Dadurch wird die strukturelle Begrenzung zwischen benachbarten Abführkanälen im Gehäuse auf einfacherer und kostengünstigere Weise hergestellt.

Gemäß einem vorteilhaften Aspekt der Erfindung kann das Flächenelement der Kanaltrennwände an Abschnitten des mäanderförmigen Querschnitts, die an die Abschnittstrennwand zwischen dem zwischen dem Zellenaufnahmeabschnitt und dem Gasabführabschnitt angrenzen, also sich in unmittelbarer Nähe zur Abschnittstrennwand befinden, zu den Gasdurchlassöffnungen der Abschnittstrennwand korrespondierende Öffnungen aufweisen. Somit wird eine Fluidverbindung zwischen der Aufnahmekammer und dem zugeordneten Abführkanal in allen Abführkanälen gleichermaßen sichergestellt.

Gemäß einem alternativen Aspekt der Erfindung können mehrere benachbarte Kanaltrennwände zwischen den Abführkanälen durch ein gemeinsames Flächenelement mit einem trapezförmigen Querschnitt der Abführkanäle integral gebildet werden. Hierdurch ergeben sich fertigungstechnische Vorteile.

Gemäß einem darauf aufbauenden, alternativen Aspekt der Erfindung können jeweils zwei Abführkanäle mit einem trapezförmigen Querschnitt mittels Durchlassöffnungen in einer dazwischen angeordneten Kanaltrennwand fluidverbunden sein, und einer Fluidverbindung mit einer einzelnen Aufnahmekammer zugeordnet sein. Durch diese Kanalstruktur kann eine Fertigung von zusätzlichen Öffnungen in dem Flächenelement der Kanaltrennwände, insbesondere in Dachflächen zwischen den Kanaltrennwänden entfallen und somit vereinfacht werden.

Gemäß einem vorteilhaften Aspekt der Erfindung können die Abführkanäle zumindest abschnittsweise eine Abführkammer bilden, die durch wenigstens ein drucksensibles Abgrenzungselement, das bei Überschreitung eines vorbestimmten Drucks in eine abführende Strömungsrichtung öffnet, im Strömungsquerschnitt des Abführkanals begrenzt wird. Somit wird einerseits eine weitere Begrenzung zur Trennung einer Fluidverbindung zwischen benachbarten Abführkanälen bereitgestellt. Ferner wird andererseits, beispielsweise in Form eines irreversibel berstenden Plättchens, eine konstruktiv gestaltete Bedingung im Sinne eines druckbasierten Schwellwerts installiert, der zur tatsächlichen Öffnung der Entlüftung durch eine entsprechend fortgeschrittene Ausgasung infolge einer thermischen Überlastung überschritten werden muss.

Gemäß einem vorteilhaften Aspekt der Erfindung kann das drucksensible Abgrenzungselement einen Strömungsweg zum Gasauslass durch einen Umgehungsabschnitt des Gehäuses freigeben, der eine vertikale Projektion aller Aufnahmekammern umgeht. Durch die entsprechende Ausgestaltung einer gerichteten Abgasführung kann noch besser im Sinne der Erfindung verhindert werden, dass die thermische Last des Abgases aus einer Batteriezelle sich auf andere Batteriezellen in einer benachbarten oder auch in einer beliebigen anderen Aufnahmekammer auf dem Weg zum Gasauslass auswirkt.

Gemäß einem vorteilhaften Aspekt der Erfindung können in dem Abführabschnitt des Gehäuses, in einer Funkenabscheidestrecke wenigstens zwei Funkenabscheideelemente mit einer Abscheidefläche, die in einen Strömungsquerschnitt eines Strömungswegs zu dem Gasauslass hineinragt, angeordnet sein. Neben diversen Richtungsablenkungen in den individuellen gerichteten Strömungswegen, welche bereits eine abscheidende Wirkung auf Partikel basierend auf deren Massenträgheit erzielen, verhilft dieses Merkmal, einen Austritt von im Abgas enthaltenen, glühenden Partikeln aus dem Gehäuse der Batterievorrichtung nach außen noch besser zu verhindern.

Gemäß einem darauf aufbauenden vorteilhaften Aspekt der Erfindung kann die Abscheidefläche der Funkenabscheideelemente in einem Winkel von weniger als 90° gegen eine Strömungsrichtung des Strömungswegs zu dem Gasauslass geneigt sein. Dadurch wird die Wirkung der Funkenabscheidestrecke, insbesondere eine Rückhaltung von Partikeln optimiert.

Weitere Vorteile, Merkmale und Einzelheiten der Erfindung ergeben sich aus der nachfolgenden Beschreibung, in der unter Bezugnahme auf die Zeichnungen, Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1a: eine schematische Darstellung eines seitlichen Querschnitts einer Batteriespeichervorrichtung gemäß einer Ausführungsform der Erfindung,
- Fig. 1b: eine detaillierte Darstellung des Abführabschnitts aus der schematischen Darstellung nach Fig. 1a,
- Fig. 2: eine schematische Darstellung einer oberen Draufsicht auf den Abführabschnitt des Gehäuses der Batteriespeichervorrichtung gemäß der Ausführungsform der Erfindung,
- Fig. 3: eine schematische Darstellung einer perspektivischen Ansicht eines äußeren Bereichs des Abführabschnitts des Gehäuses der Batteriespeichervorrichtung gemäß der Ausführungsform der Erfindung,
- Fig. 4: eine schematische Darstellung einer perspektivischen Ansicht eines inneren Bereichs des Abführabschnitts des Gehäuses der Batteriespeichervorrichtung gemäß der Ausführungsform der Erfindung,
- Fig. 5: eine schematische Darstellung eines seitlichen Querschnitts des Abführabschnitts des Gehäuses der Batteriespeichervorrichtung gemäß der Ausführungsform der Erfindung,
- Fig. 6: eine schematische Darstellung eines seitlichen Querschnitts einer Batteriespeichervorrichtung mit einer trapezförmigen, kanalbildenden Struktur gemäß einer weiteren Ausführungsform der Erfindung,
- Fig. 7: eine schematische Darstellung eines Teils des seitlichen Querschnitts der Fig. 6,
- Fig. 8: eine schematische isolierte Darstellung eines Teils eines den Abführkanal bildenden Blechs, und
- Fig. 9: die Ausführungsform der Fig. 8 in anderer Perspektive.

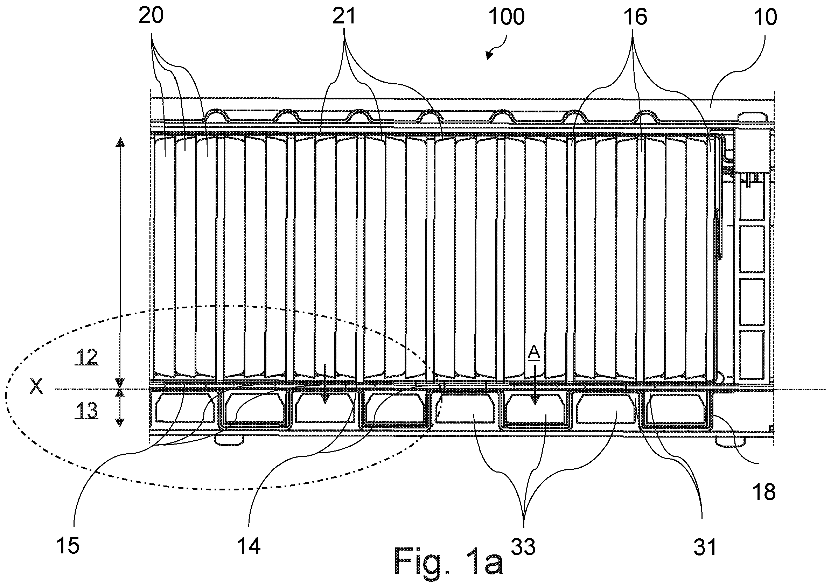

Fig. 1a zeigt schematisch einen seitlichen Querschnitt durch ein Gehäuse 10 einer Batteriespeichervorrichtung 100. Eine gestrichelt eingezeichnete, horizontale Linie X gibt eine funktionale Unterteilung an, an der das Gehäuse 10 in einen Zellenaufnahmeabschnitt 12, in dem Batteriezellen 20 aufgenommen sind, und in einen Abführabschnitt 13, in dem Abführkanäle 31 zur Entlüftung verlaufen, aufgeteilt ist. Eine Abschnittstrennwand 14 mit Gasdurchlassöffnungen 15 ist zur Abgrenzung zwischen dem Zellenaufnahmeabschnitt 12 und dem Abführabschnitt 13 angeordnet, und bildet eine Abtrennung entlang der gestrichelten, horizontalen Linie X, die durch die Gasdurchlassöffnungen 15 gasdurchlässig, aber im übrigen gasundurchlässig ist.

Der Zellenaufnahmeabschnitt 12 umfasst eine Mehrzahl von Aufnahmekammern 21, in denen jeweils Gruppen von wenigen Batteriezellen angeordnet sind. **In** der dargestellten Ausführungsform sind in jeder Aufnahmekammer eine Gruppe von drei Batteriezellen 20 in Form von Pouchzellen aufgenommen. **In** alternativen Ausführungsformen kann in jeder Aufnahmekammer 21 ebenso eine einzelne oder eine andere Anzahl von Batteriezellen 20 in prismatischer, zylindrischer oder sonstiger Form angeordnet sein. In einer nicht weiter dargestellten Verdrahtung sind die Batteriezellen 20 einer Aufnahmekammer 21 untereinander elektrisch parallel geschaltet und von einer Aufnahmekammer 21 zur Nächsten elektrisch in Serie geschaltet.

Zwischen den Aufnahmekammern 21 ist jeweils eine Kammertrennwand 16 angeordnet, welche die Volumina der Aufnahmekammern 21 voneinander abgrenzt. Die Kammertrennwände 16 stellen eine gasundurchlässige Abgrenzung zwischen jeder Aufnahmekammer 21 dar, und verhindern eine mögliche Ausbreitung heißer Gase von einer Aufnahmekammer 21 auf die Nächste. Die Kammertrennwände 16 erstrecken sich entlang einer Längserstreckung der Batteriezellen 20.

Der Abführabschnitt 13 umfasst eine Mehrzahl von Abführkanälen 31, die sich jeweils unterhalb einer Aufnahmekammer 12 befinden und in gleichen Abständen zu diesen angeordnet oder in gleichen Abmessungen einer Breite und Länge in Bezug auf die Aufnahmekammern 21 unter der Abschnittstrennwand 14 ausgebildet sind. Jeder Abführkanal 31 ist genau einer Aufnahmekammer 21 zugeordnet und steht über mehrere Gasdurchlassöffnungen 15 in der Abschnittstrennwand 14 in einer Fluidverbindung mit dem Volumen der zugeordneten Aufnahmekammer 21.

Mit anderen Worten ist jeweils ein Abführkanal 31 einer Aufnahmekammer 21 zugeordnet und mit dieser fluidverbunden. Alternativ können beispielsweise jeweils zwei Abführkanäle 31 einer Aufnahmekammer 21 zugeordnet und mit dieser fluidverbunden sein.

Zwischen den Abführkanälen 31 ist jeweils eine Kanaltrennwand 18 angeordnet, welche die Volumina der Abführkanälen 31 voneinander abgrenzt. Die Kanaltrennwände 18 bilden eine gasundurchlässige Unterteilung zwischen benachbarten Abführkanälen 31 und verhindern eine mögliche Ausbreitung heißer Gase von einem Abführkanal 31 auf den benachbarten Abführkanal 31.

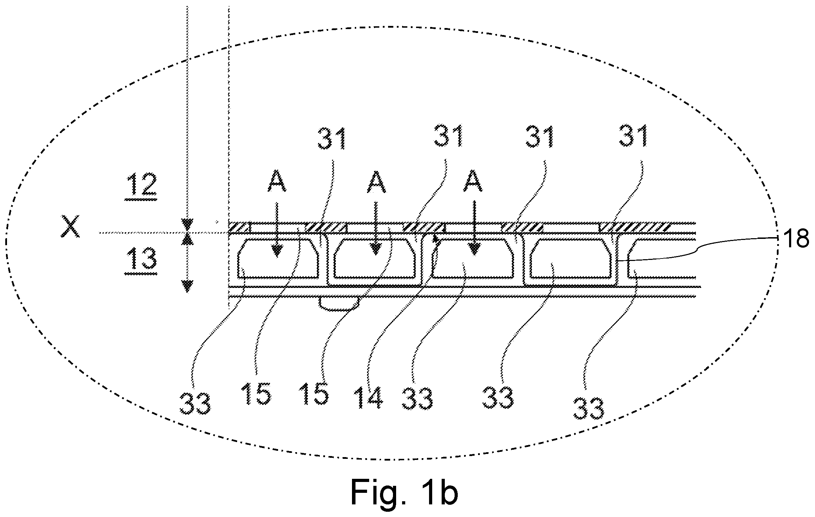

Fig. 1b zeigt eine detaillierte Darstellung des Abführabschnitts 13 aus der schematischen Darstellung nach Fig. 1a, welche dort als strichpunktierter Kreis dargestellt ist. Die Fig. 1b zeigt die Abschnittstrennwand 14, durch welche die Gasdurchlassöffnungen 15 hindurchführen. Der durch die Gasdurchlassöffnungen 15 strömende Gasstrom A wird schematisch durch Pfeile angedeutet.

Der Gasstrom A durchtritt die Abschnittstrennwand 14 durch die Gasdurchlassöffnungen 15 und verteilt sich jeweils entlang der Abführkanäle 31. Die zwischen zwei Abführkanälen 31 angeordnete Kanaltrennwand 18 grenzt benachbarte Abführkanäle 31 gasundurchlässig voneinander ab und ist hier vorteilhaft mit einem mäanderförmig gewellten Blech ausgebildet. Der Gasstrom A, welcher sich jeweils entlang der Abführkanäle 31 ausbreitet, trifft am Ende eines jeden Abführkanals 31 auf ein drucksensibles Abgrenzungselement 33, welches als sog. Flap ausgeführt werden kann. Dieses Abgrenzungselement 33 grenzt den Abführkanal 31 in Richtung eines Umgehungswegs 11 ab und öffnet sich erst bei einem vorbestimmten Druckdifferenz zwischen dem jeweiligen Abfuhrkanal 31 und dem Umgehungsweg 11. Die Größe des Abgrenzungselements 33 ist vorteilhaft annähernd so groß wie der Querschnitt des Abführkanals 31, um bei geöffneten Abgrenzungselement 33 einen großen Strömungsquerschnitt zu ermöglichen.

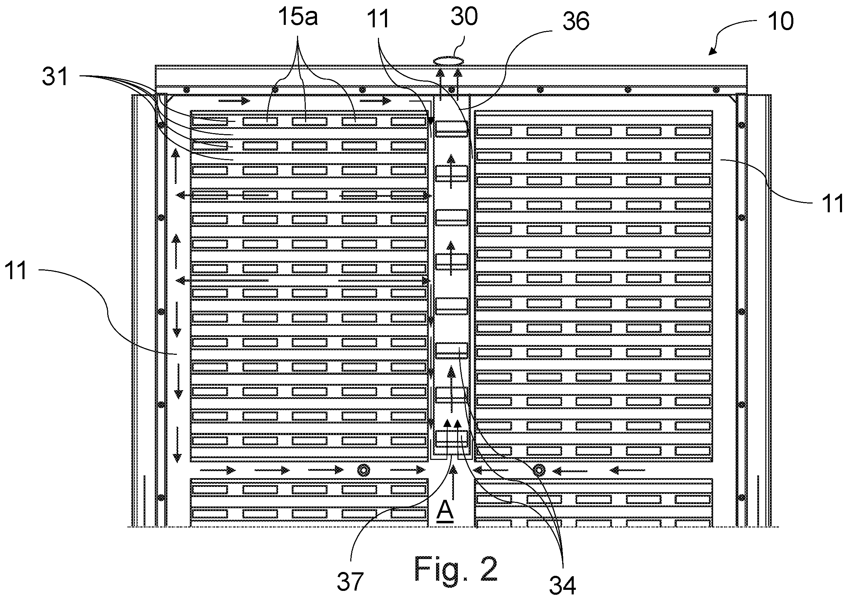

Fig. 2 zeigt eine Draufsicht auf den Abführabschnitt 13 des Gehäuses 10 aus Sicht des darüber liegenden Aufnahmeabschnitts 12, d.h. die Gehäusestruktur unterhalb der Abschnittstrennwand 14 mit dem die Kanaltrennwände 18 bildenden mäanderförmigen Flächenelement. Dabei bildet das die mäanderförmige Flächenelement abwechselnd die obere (an die nicht dargestellte Abschnittstrennwand 14 angrenzende) und die untere Begrenzung der Abführkanäle 31. Die oberen durch das mäanderförmige Flächenelement gebildeten Begrenzungen weisen Öffnungen 15a auf, die mit den nicht dargestellten Gasdurchlassöffnungen 15 der Abschnittstrennwand 14 korrespondieren. Die Abführkanäle 31 sind in zwei Blöcken nebeneinander angeordnet. Zwischen den beiden Blöcken und außerhalb der beiden Blöcke münden die Stirnseiten der Abführkanäle 31 jeweils in einen Umgehungsabschnitt 11.

Der Umgehungsabschnitt 11 ist ein Sammelkanal, der die durch Pfeile dargestellten Gasströme A aus den separaten Abführkanälen 31 vereint, umlenkt und über einen Funkenabscheidestreckeneinlass 37 in eine Funkenabscheidestrecke 36 zu einem gemeinsamen Gasauslass 30 des Abführabschnitts 13 führt. Der durch Pfeile schematisch dargestellte Gasstrom A zeigt in den Fig. lediglich eine beispielhafte Momentaufnahme und richtet sich nach den jeweiligen Druckverhältnissen im Gehäuse 10. Der Gasauslass 30 ist eine Öffnung im Gehäuse 10, oder alternativ ein gegen äußere Einflüsse verschlossener und bedingt geöffneter Auslass aus dem Gehäuse 10, wie beispielsweise ein Druckventil. Der Umgehungsabschnitt 11 führt das Abgas aus einem beliebigen Abführkanal 31 an einer Grundfläche, d.h. an einer vertikalen Projektion von sämtlichen darüber liegenden Aufnahmekammern 21 zwischen den Blöcken oder außerhalb der Blöcke vorbei. Somit wird verhindert, dass eine intakte Batteriezelle 20 in einer Aufnahmekammer 21 unmittelbar durch ein darunter hindurch geleitetes heißes Abgas erwärmt wird, das aus einer thermisch überlasteten Batteriezelle 20 in einer anderen Aufnahmekammer 21 abgeführt wird. Ferner sind zumindest in der Funkenabscheidestrecke 36 vor dem Gasauslass 30 aus dem Gehäuse 10 mehrere Funkenabscheideelemente 34 angeordnet, deren Funktionsweise später beschrieben wird.

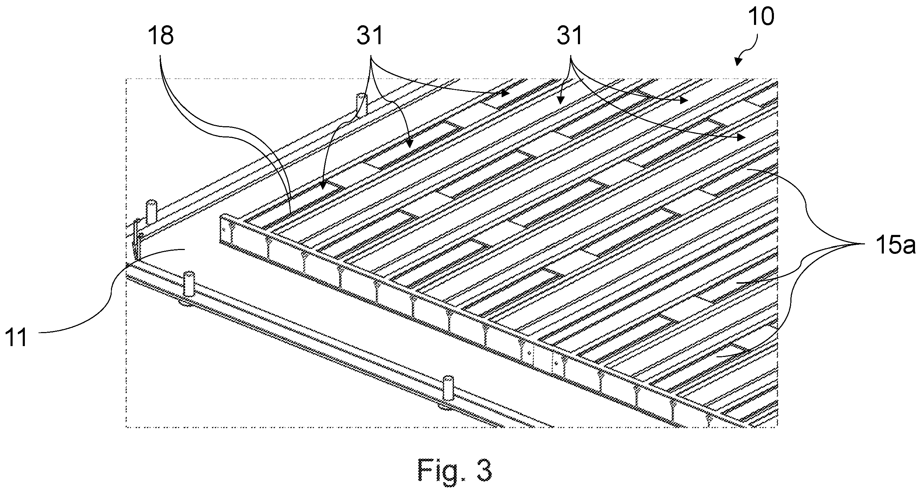

Die Fig. 3 zeigt eine perspektivische Ansicht auf den Abführabschnitt 13 des Gehäuses 10, d.h. auf die aus dem mäanderförmigen Flächenelement gebildeten Kanaltrennwänden 18, die wiederum die Abführkanäle 31 aus Fig. 2 bilden. Somit entsteht abwechselnd ein Abführkanal 31 mit einer integralen Bodenfläche und daneben ein Abführkanal 31 mit einer integralen Dachfläche. Wie zuvor erwähnt, weist an derartigen Dachflächen das die Kanaltrennwände 18 bildende mäanderförmige Flächenelement jeden zweiten Abführkanals 31 Öffnungen 15a auf, die mit nicht dargestellten darüber liegenden Gasdurchlassöffnungen 15 der Abschnittstrennwand 14 korrespondieren. Bei jedem zweiten Abführkanal 31 stellen Gasdurchlassöffnungen 15 der nicht dargestellten Abschnittstrennwand 14 eine Verbindung zur darüber liegenden Aufnahmekammer 21 her.

**In** der Ansicht aus Fig. 3 sind die Stirnseiten der Abführkanäle 31 in den äußeren Bereich des Umgehungsabschnitts 11 ersichtlich, die durch nicht dargestellte drucksensible Abgrenzungselemente 33 verschlossen sind. Somit bilden die Abgrenzungselemente 33 an den Enden eines jeden Abführkanals 31 funktional eine Abführkammer, deren Volumen zu den angrenzenden Umgehungsabschnitten 11 zunächst abgegrenzt ist, jedoch über Gasdurchlassöffnungen 15 mit dem Volumen einer darüber zugeordneten Aufnahmekammer 21 in einer Fluidverbindung steht. Dadurch besteht keine Fluidverbindung zwischen Volumina unterschiedlicher Aufnahmekammern 21 über den Umweg des Umgehungsabschnitts 11 , solange nicht mindestens zwei Abgrenzungselemente 33 durch einen Überdruck geöffnet wurden.

Die drucksensiblen Abgrenzungselemente 33 sind in der dargestellten Ausführungsform als Klappen ausgestaltet, die sich bei einem vorbestimmten Druck nur in eine Richtung zur Entlüftung öffnen lassen, aber eine Rückströmung in den Abführkanal 31 verhindern. Wenn ein thermisch bedingter Innendruck in einer Aufnahmekammer 21 und damit in der zwischen den zwei Abgrenzungselementen 33 eines Abführkanals 31 gebildeten Abführkammer ansteigt und den vorbestimmten Druck übersteigt, öffnet das betreffende Abgrenzungselement 33 und gibt das austretende Gas in den Umgehungsabschnitt 11 frei.

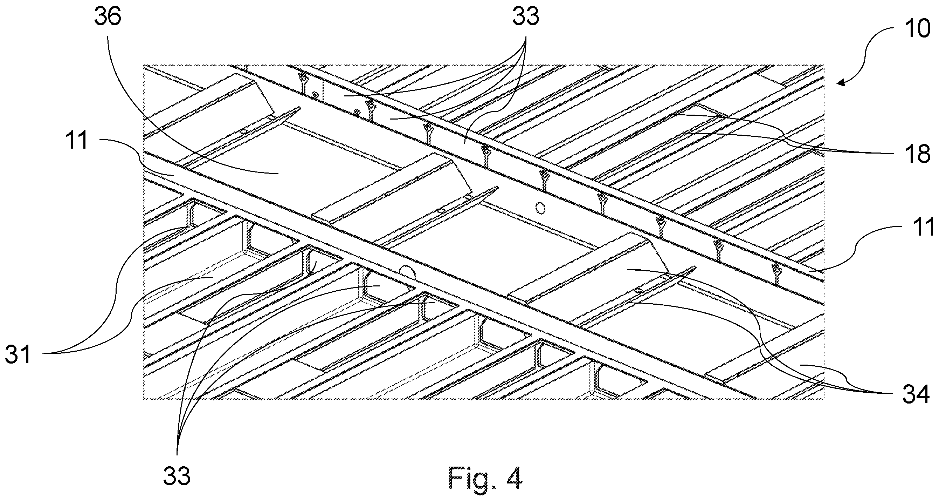

Fig. 4 zeigt eine perspektivische Ansicht auf einen Teilausschnitt des Abführabschnittes 13 des Gehäuses 10, bei der die Stirnseiten der Abführkanäle 31 in die im mittleren Bereich gebildeten Umgehungsabschnitte 11 und die Funkenabscheidestrecke 36 zwischen den beiden Blöcken von Abführkanälen 31 ersichtlich sind. Bei der dargestellten Ausführungsform sind auch an diesen Stirnflächen die drucksensiblen Abgrenzungselemente 33 angeordnet, durch welche zunächst begrenzte Abführkammern gebildet werden. Ferner sind Funkenabscheideelemente 34 dargestellt, welche eine Umlenkung des Gasstroms A in der Funkenabscheidestrecke 36 bewirken.

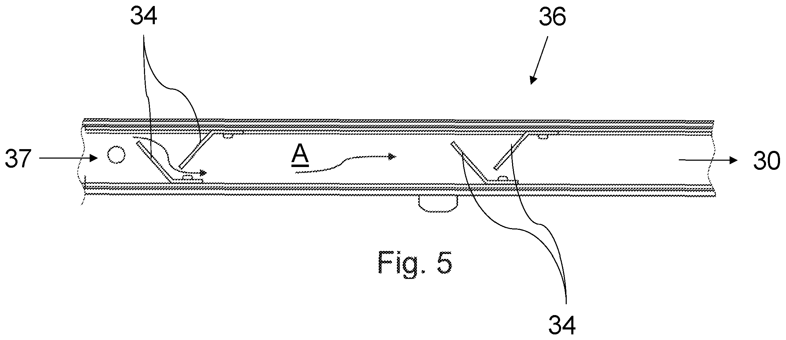

Fig. 5 zeigt in einem seitlichen Querschnitt einen Teil der Funkenabscheidestrecke 36, in welcher die Funkenabscheideelemente 34 positioniert sind. Der Gasstrom A strömt vom Funkenabscheidestreckeneinlass 37 in die Funkenabscheidestrecke 36 ein, in welcher die Funkenabscheideelemente 34 angeordnet sind.

Die Funkenabscheideelemente 34 weisen Abscheideflächen auf, die von unterschiedlichen Seiten in einen Strömungsquerschnitt der Funkenabscheidestrecke 36 hineinragen. Durch die Richtungsänderungen des Gasstroms A werden Partikel wie z.B. glühende Teilchen aufgrund der Trägheit einer höheren Masse im Vergleich zu den Gasmolekülen bei jeder Umlenkung nach außen getragen. Durch den spitzen Winkel der Abscheideflächen, die mit weniger als 90 ° entgegen dem Gasstrom A geneigt sind, werden Taschen gebildet, in den sich die Partikel ansammeln und zurückgehalten werden. Prinzipiell erfolgen Umlenkungen eines Gasstroms mit ähnlicher abscheidender Wirkung bereits in einem Bereich der Abführkanäle 31, wie z.B. an einer Bodenfläche oder den Kanaltrennwänden 18 und danach bei einem Übertritt in den Umgehungsabschnitt 11.

Die Funkenabscheideelemente 34 erhöhen jedoch gerade auf der kürzeren Strecke der Funkenabscheidestrecke 36 die Anzahl der Umlenkungen und verbessern den Rückhalt der Partikel vor einem Austritt durch den Gasauslass 30.

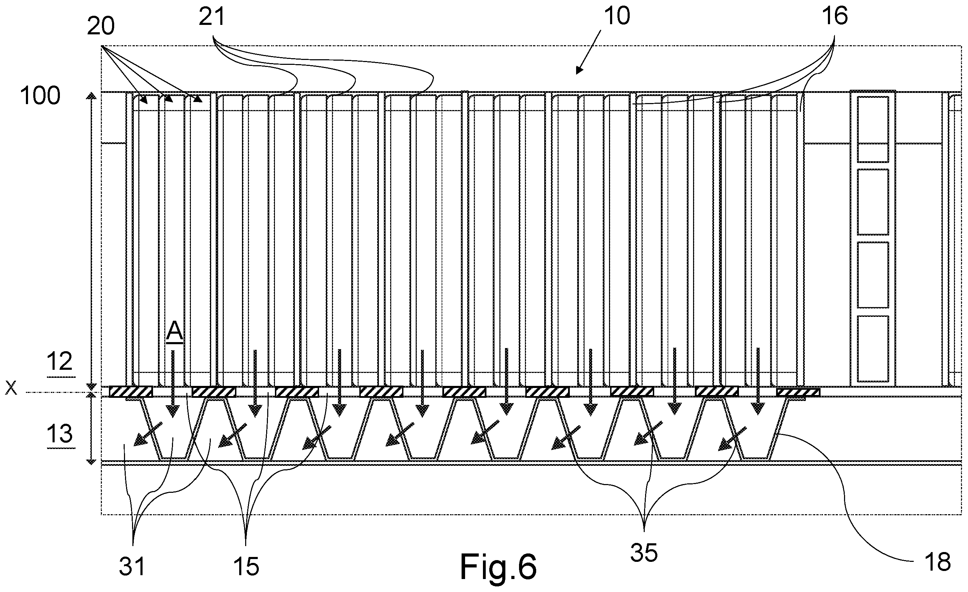

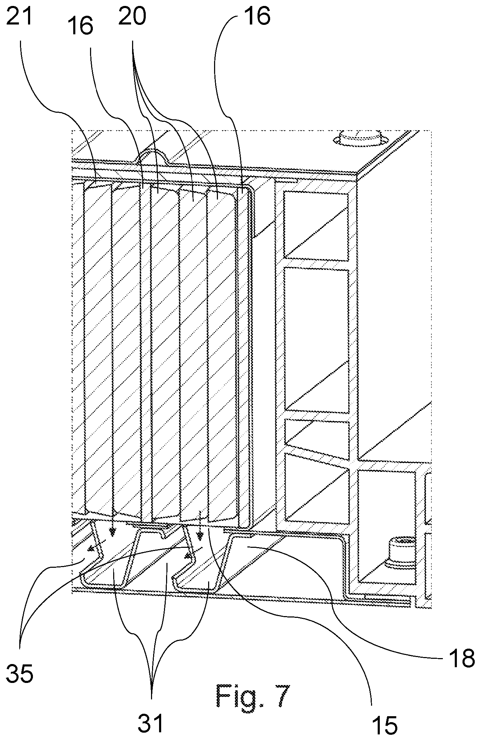

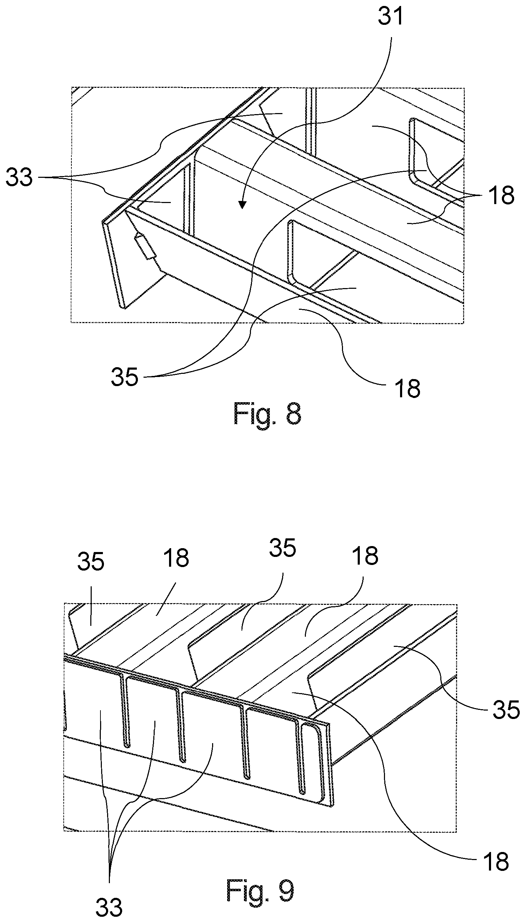

Die Fig. 6 bis 9 zeigen eine weitere Ausführungsform einer erfindungsgemäßen Batteriespeichervorrichtung 100. Diese weist als Weiterentwicklung eine geänderte Geometrie des Abführkanals 31 auf, welcher hier trapezförmig ausgebildet ist. Bei ansonsten identischer Funktion wird die Fertigung deutlich vereinfacht und auch die Funktionsweise weiter verbessert. Der Gasstrom A ist insbesondere in den Fig. 6 und 7 gut zu verfolgen. Über die Gasdurchlassöffnungen 15 gelangt der Gasstrom A in den ersten Teilabschnitt der trapezförmigen Abführkanäle 31. Durch Durchlassöffnungen 35 in den seitlichen trapezförmigen Kanaltrennwänden 18 wird das Gas weitergeführt und kann den bereits zu den Fig. 1 bis 4 beschriebenen Weg nehmen. Dabei sind stets lediglich zwei benachbarte Abführkanäle 31 durch die Durchlassöffnungen 35 in einer Kanaltrennwand 18 verbunden und zu weiteren benachbarten Abführkanälen 31 durch Kanaltrennwände 18 ohne Durchlassöffnungen 35 abgegrenzt. So kann eine Ausbreitung von heißen Gasen unterhalb von intakten Batteriezellen 20 einer anderen Aufnahmekammer 21 verhindert werden. Somit sind jeweils zwei Abführkanäle 31 einer Aufnahmekammer 21 zugeordnet und mit dieser fluidverbunden.

Die voranstehenden Erläuterungen der Ausführungsformen beschreiben die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Gehäuse
- 11: Umgehungsabschnitt
- 12: Aufnahmeabschnitt
- 13: Abführabschnitt
- 14: Abschnittstrennwand
- 15: Gasdurchlassöffnung
- 15a: Öffnung
- 16: Kammertrennwand
- 18: Kanaltrennwand
- 20: Batteriezelle
- 21: Aufnahmekammer
- 30: Gasauslass
- 31: Abführkanal
- 33: drucksensibles Abgrenzungselement
- 34: Funkenabscheideelement
- 35: Durchlassöffnung
- 36: Funkenabscheidestrecke
- 37: Funkenabscheidestreckeneinlass
- 100: Batteriespeichervorrichtung
- A: Gasstrom
- X: funktionale Unterteilung

## Patentansprüche

1. Batteriespeichervorrichtung (100), aufweisend ein Gehäuse (10) mit:
einem Zellenaufnahmeabschnitt (12) zur Aufnahme einer Mehrzahl von Batteriezellen (20),
einem Gasabführabschnitt (13) zum Abführen einer Ausgasung aus den Batteriezellen (20) über definierte Strömungswege;
einer Abschnittstrennwand (14) mit Gasdurchlassöffnungen (15) horizontal angeordnet zur Abgrenzung zwischen dem Zellenaufnahmeabschnitt (12) und dem Gasabführabschnitt (13), wobei die Abschnittstrennwand (14) durch die Gasdurchlassöffnungen (15) gasdurchlässig und im übrigen gasundurchlässig ist; und
einem Gasauslass (30), der durch das Gehäuse (10) hindurch zu einer Außenseite führt, zum Auslassen der Ausgasung von einer Innenseite des Gehäuses (10) zur Außenseite des Gehäuses (10);
**dadurch gekennzeichnet, dass**
der Zellenaufnahmeabschnitt (12) des Gehäuses (10) mehrere mittels mindestens einer Kammertrennwand (16) gasundurchlässig unterteilte Aufnahmekammern (21), in denen eine einzelne Batteriezelle oder eine Gruppe von mehreren Batteriezellen (20) aufgenommen ist, aufweist; und
der Gasabführabschnitt (13) des Gehäuses (10) mehrere zumindest teilweise mittels mindestens einer Kanaltrennwand (18) gasundurchlässig unterteilte Abführkanäle (31), die jeweils mit einer zugeordneten Aufnahmekammer (21) in einer Fluidverbindung stehen und einen, zumindest abschnittsweise, separaten Strömungsweg ausbilden, aufweist.

2. Batteriespeichervorrichtung (100) nach Anspruch 1, wobei die mindestens eine Kammertrennwand (16) und/oder die mindestens eine Kanaltrennwand (18) orthogonal zu der Abschnittstrennwand (14) zu einer mittels Gasdurchlassöffnungen (15) gasdurchlässigen Unterteilung des Gehäuses (10) zwischen dem Zellenaufnahmeabschnitt (12) und dem Gasabführabschnitt (13) verlaufen.

3. Batteriespeichervorrichtung (100) nach Anspruch 1 oder 2, wobei die Abschnittstrennwand (14) mit Gasdurchlassöffnungen (15) zur gasdurchlässige Unterteilung zwischen dem Zellenaufnahmeabschnitt (12) und dem Gasabführabschnitt (13) im Wesentlichen horizontal in dem Gehäuse (10) verläuft, und die mindestens eine Kammertrennwand und/oder die mindestens eine Kanaltrennwand (18) im Wesentlichen vertikal in dem Gehäuse (10) verlaufen.

4. Batteriespeichervorrichtung (100) nach einem der vorhergehenden Ansprüche, wobei der Zellenaufnahmeabschnitt (12) über der Abschnittstrennwand (14) und der Gasabführabschnitt (13) unter der Abschnittstrennwand (14) angeordnet ist.

5. Batteriespeichervorrichtung (100) nach einem der vorhergehenden Ansprüche, wobei die Gasdurchlassöffnungen (15) in der Abschnittstrennwand (14) jeweils separate Fluidverbindungen zwischen einer Aufnahmekammer (21) und einem Abführkanal (31) bilden.

6. Batteriespeichervorrichtung (100) nach einem der vorhergehenden Ansprüche, wobei die Kammertrennwände (16) zur gasundurchlässigen Unterteilung zwischen den Aufnahmekammern (21) des Zellenaufnahmeabschnitts (12) parallel zu einer Längserstreckung der Batteriezellen (20) verlaufen.

7. Batteriespeichervorrichtung (100) nach einem der vorhergehenden Ansprüche, wobei die Kanaltrennwände (18) zur zumindest teilweise gasundurchlässigen Unterteilung zwischen den Abführkanälen (31) des Gasabführabschnitts (13) in denselben Abständen wie die Kammertrennwände (16) zwischen den Aufnahmekammern (21) angeordnet sind und insbesondere in zumindest einer Richtung parallel zu diesen verlaufen.

8. Batteriespeichervorrichtung (100) nach einem der vorhergehenden Ansprüche, wobei mehrere benachbarte Kanaltrennwände (18) zwischen den Abführkanälen (31) durch ein gemeinsames Flächenelement mit einem mäanderförmigen Querschnitt der Abführkanäle (31) integral gebildet werden.

9. Batteriespeichervorrichtung (100) nach Anspruch 8, wobei das Flächenelement der Kanaltrennwände (18) an Abschnitten des mäanderförmigen Querschnitts, die angrenzend an die Abschnittstrennwand (14) zwischen dem Zellenaufnahmeabschnitt (12) und dem Gasabführabschnitt (13) angeordnet sind, zu den Gasdurchlassöffnungen (15) der Abschnittstrennwand (14) korrespondierende Gasdurchlassöffnungen (15) aufweist.

10. Batteriespeichervorrichtung (100) nach einem der Ansprüche 1 bis 7, wobei mehrere benachbarte Kanaltrennwände (18) zwischen den Abführkanälen (31) durch ein gemeinsames Flächenelement mit einem trapezförmigen Querschnitt der Abführkanäle (31) integral gebildet werden.

11. Batteriespeichervorrichtung (100) nach einem der vorhergehenden Ansprüche, wobei jeweils zwei benachbarte Abführkanäle (31) mittels Durchlassöffnungen (35) in einer dazwischen angeordneten Kanaltrennwand (18) fluidverbunden sind, und einer Fluidverbindung mit einer einzelnen Aufnahmekammer (21) zugeordnet sind.

12. Batteriespeichervorrichtung (100) nach einem der vorhergehenden Ansprüche, wobei die Abführkanäle (31) zumindest abschnittsweise eine Abführkammer bilden, die durch wenigstens ein drucksensibles Abgrenzungselement (33), das bei Überschreitung eines vorbestimmten Drucks in eine abführende Strömungsrichtung öffnet, im Strömungsquerschnitt des Abführkanals (31) begrenzt wird.

13. Batteriespeichervorrichtung (100) nach Anspruch 12, wobei das drucksensible Abgrenzungselement (33) einen Strömungsweg zum Gasauslass (30) durch einen Umgehungsabschnitt (11) des Gehäuses (10) freigibt, der eine vertikale Projektion aller Aufnahmekammern (21) umgeht.

14. Batteriespeichervorrichtung (100) nach einem der vorhergehenden Ansprüche, wobei in dem Abführabschnitt (13) des Gehäuses (10), insbesondere in einer Funkenabscheidestrecke (36), wenigstens zwei Funkenabscheideelemente (34) mit einer Abscheidefläche, die in einen Strömungsquerschnitt eines Strömungswegs zu dem Gasauslass (30) hineinragt, angeordnet sind.

15. Batteriespeichervorrichtung (100) nach Anspruch 14, wobei die Abscheidefläche der Funkenabscheideelemente (34) in einem Winkel von weniger als 90° gegen eine Strömungsrichtung des Strömungswegs zu dem Gasauslass (30) geneigt ist.

## Claims

1. A battery storage device (100), comprising a housing (10) with:
a cell receiving section (12) for receiving a plurality of battery cells (20),
a gas discharge section (13) for discharging an outgassing from the battery cells (20) via defined flow paths;
a section partition wall (14) with gas passage openings (15) arranged horizontally for delimitation between the cell receiving section (12) and the gas discharge section (13),
wherein the section partition wall (14) is gas-permeable through the gas passage openings (15) and otherwise gas-impermeable; and
a gas outlet (30), which leads through the housing (10) to an outside, for discharging the outgassing from an inside of the housing (10) to the outside of the housing (10);
**characterized in that**
the cell receiving section (12) of the housing (10) has a plurality of receiving chambers (21), which are subdivided by means of at least one chamber partition wall (16) in a gas-impermeable manner, and in which a single battery cell or a group of a plurality of battery cells (20) is received; and
the gas discharge section (13) of the housing (10) has a plurality of discharge ducts (31), which are at least partially subdivided by means of at least one duct partition wall (18) in a gas-impermeable manner, which are each in fluid communication with an associated receiving chamber (21) and form, at least in sections, a separate flow path.

2. The battery storage device (100) according to claim 1, wherein the at least one chamber partition wall (16) and/or the at least one duct partition wall (18) run orthogonally to the section partition wall (14) for a gas-permeable subdivision of the housing (10) by means of gas passage openings (15) between the cell receiving section (12) and the gas discharge section (13).

3. The battery storage device (100) according to claim 1 or 2, wherein the section partition wall (14) with gas passage openings (15) for the gas-permeable subdivision between the cell receiving section (12) and the gas discharge section (13) runs substantially horizontally in the housing (10), and the at least one chamber partition wall (16) and/or the at least one duct partition wall (18) run substantially vertically in the housing (10).

4. The battery storage device (100) according to any one of the preceding claims, wherein the cell receiving section (12) is arranged above the section partition wall (14) and the gas discharge section (13) is arranged below the section partition wall (14).

5. The battery storage device (100) according to any one of the preceding claims, wherein the gas passage openings (15) in the section partition wall (14) each form separate fluid communications between a receiving chamber (21) and a discharge duct (31).

6. The battery storage device (100) according to any one of the preceding claims, wherein the chamber partition walls (16) for the gas-impermeable subdivision between the receiving chambers (21) of the cell receiving section (12) run parallel to a longitudinal extension of the battery cells (20).

7. The battery storage device (100) according to any one of the preceding claims, wherein the duct partition walls (18) for the at least partially gas-impermeable subdivision between the discharge ducts (31) of the gas discharge section (13) are arranged at the same intervals as the chamber partition walls (16) between the receiving chambers (21) and in particular run parallel to these in at least one direction.

8. The battery storage device (100) according to any one of the preceding claims, wherein a plurality of adjacent duct partition walls (18) between the discharge ducts (31) are integrally formed by a common surface element with a meandering shaped cross-section of the discharge ducts (31).

9. The battery storage device (100) according to claim 8, wherein the surface element of the duct partition walls (18) has, at sections of the meandering shaped cross-section which are arranged adjacent to the section partition wall (14) between the cell receiving section (12) and the gas discharge section (13), gas passage openings (15) corresponding to the gas passage openings (15) of the section partition wall (14).

10. The battery storage device (100) according to any one of claims 1 to 7, wherein a plurality of adjacent duct partition walls (18) between the discharge ducts (31) are integrally formed by a common surface element with a trapezoidal shaped cross-section of the discharge ducts (31).

11. The battery storage device (100) according to any one of the preceding claims, wherein two respective adjacent discharge ducts (31) are in fluid communication by means of passage openings (35) in a duct partition wall (18) arranged therebetween, and are associated with a fluid communication with a single receiving chamber (21).

12. The battery storage device (100) according to any one of the preceding claims, wherein the discharge ducts (31) form, at least in sections, a discharge chamber which is delimited in the flow cross-section of the discharge duct (31) by at least one pressure-sensitive delimitation element (33) which opens in a discharging flow direction when a predetermined pressure is exceeded.

13. The battery storage device (100) according to claim 12, wherein the pressure-sensitive delimitation element (33) clears a flow path to the gas outlet (30) through a bypass section (11) of the housing (10), which bypasses a vertical projection of all receiving chambers (21).

14. The battery storage device (100) according to any one of the preceding claims, wherein in the discharge section (13) of the housing (10), in particular in a spark separation path (36), at least two spark separation elements (34) are arranged with a separation surface, which projects into a flow cross-section of a flow path to the gas outlet (30).

15. The battery storage device (100) according to claim 14, wherein the separation surface of the spark separation elements (34) is inclined at an angle of less than 90° against a flow direction of the flow path to the gas outlet (30).

## Revendications

1. Dispositif de stockage de batterie (100), présentant un boîtier (10) avec :
• une section de réception de cellules (12) pour recevoir une pluralité de cellules de batterie (20),
• une section d'évacuation de gaz (13) pour évacuer un dégazage des cellules de batterie (20) via des voies d'écoulement définies ;
• une paroi de séparation de section (14) ayant des ouvertures de passage de gaz (15) disposée horizontalement pour la délimitation entre la section de réception de cellules (12) et la section d'évacuation de gaz (13), dans lequel la paroi de séparation de section (14) est perméable aux gaz à travers les ouvertures de passage de gaz (15) et imperméable aux gaz pour le reste ; et
• une sortie de gaz (30) qui mène à travers le boîtier (10) vers un côté extérieur, pour faire sortir le dégazage depuis un côté intérieur du boîtier (10) vers le côté extérieur du boîtier (10) ;
**caractérisé en ce que**
• la section de réception de cellules (12) du boîtier (10) présente plusieurs chambres de réception (21) subdivisées de manière imperméable aux gaz au moyen d'au moins une paroi de séparation de chambre (16), dans lesquelles est reçue une seule cellule de batterie ou un groupe de plusieurs cellules de batterie (20) ; et
• la section d'évacuation de gaz (13) du boîtier (10) présente plusieurs canaux d'évacuation (31) subdivisés au moins partiellement de manière imperméable aux gaz au moyen d'au moins une paroi de séparation de canal (18), qui sont chacun en communication fluidique avec une chambre de réception (21) associée et réalisent, au moins par sections, une voie d'écoulement séparée.

2. Dispositif de stockage de batterie (100) selon la revendication 1, dans lequel l'au moins une paroi de séparation de chambre (16) et/ou l'au moins une paroi de séparation de canal (18) s'étendent orthogonalement à la paroi de séparation de section (14) en une subdivision perméable aux gaz du boîtier (10) au moyen d'ouvertures de passage de gaz (15) entre la section de réception de cellules (12) et la section d'évacuation de gaz (13).

3. Dispositif de stockage de batterie (100) selon la revendication 1 ou 2, dans lequel la paroi de séparation de section (14) ayant des ouvertures de passage de gaz (15) pour la subdivision perméable aux gaz entre la section de réception de cellules (12) et la section d'évacuation de gaz (13) s'étend de manière sensiblement horizontale dans le boîtier (10), et l'au moins une paroi de séparation de chambre (16) et/ou l'au moins une paroi de séparation de canal (18) s'étendent de manière sensiblement verticale dans le boîtier (10).

4. Dispositif de stockage de batterie (100) selon l'une quelconque des revendications précédentes, dans lequel la section de réception de cellules (12) est disposée au-dessus de la paroi de séparation de section (14) et la section d'évacuation de gaz (13) au-dessous de la paroi de séparation de section (14).

5. Dispositif de stockage de batterie (100) selon l'une quelconque des revendications précédentes, dans lequel les ouvertures de passage de gaz (15) dans la paroi de séparation de section (14) forment chacune des communications fluidiques séparées entre une chambre de réception (21) et un canal d'évacuation (31).

6. Dispositif de stockage de batterie (100) selon l'une quelconque des revendications précédentes, dans lequel les parois de séparation de chambre (16) pour la subdivision imperméable aux gaz entre les chambres de réception (21) de la section de réception de cellules (12) s'étendent parallèlement à une extension longitudinale des cellules de batterie (20).

7. Dispositif de stockage de batterie (100) selon l'une quelconque des revendications précédentes, dans lequel les parois de séparation de canal (18) pour la subdivision au moins partiellement imperméable aux gaz entre les canaux d'évacuation (31) de la section d'évacuation de gaz (13) sont disposées aux mêmes intervalles que les parois de séparation de chambre (16) entre les chambres de réception (21) et s'étendent en particulier parallèlement à celles-ci dans au moins une direction.

8. Dispositif de stockage de batterie (100) selon l'une quelconque des revendications précédentes, dans lequel plusieurs parois de séparation de canal (18) adjacentes entre les canaux d'évacuation (31) sont formées de manière intégrale par un élément plan commun ayant une section transversale en méandres des canaux d'évacuation (31).

9. Dispositif de stockage de batterie (100) selon la revendication 8, dans lequel l'élément plan des parois de séparation de canal (18) présente, au niveau de sections de la section transversale en méandres qui sont disposées de manière adjacente à la paroi de séparation de section (14) entre la section de réception de cellules (12) et la section d'évacuation de gaz (13), des ouvertures de passage de gaz (15) correspondant aux ouvertures de passage de gaz (15) de la paroi de séparation de section (14).

10. Dispositif de stockage de batterie (100) selon l'une des revendications 1 à 7, dans lequel plusieurs parois de séparation de canal (18) adjacentes entre les canaux d'évacuation (31) sont formées de manière intégrale par un élément plan commun ayant une section transversale trapézoïdale des canaux d'évacuation (31).

11. Dispositif de stockage de batterie (100) selon l'une quelconque des revendications précédentes, dans lequel deux canaux d'évacuation (31) adjacents respectifs sont en communication fluidique au moyen d'ouvertures de passage (35) dans une paroi de séparation de canal (18) disposée entre eux, et sont associés à une communication fluidique avec une seule chambre de réception (21).

12. Dispositif de stockage de batterie (100) selon l'une quelconque des revendications précédentes, dans lequel les canaux d'évacuation (31) forment au moins par sections une chambre d'évacuation qui est délimitée dans la section transversale d'écoulement du canal d'évacuation (31) par au moins un élément de délimitation sensible à la pression (33) qui s'ouvre dans une direction d'écoulement d'évacuation en cas de dépassement d'une pression prédéterminée.

13. Dispositif de stockage de batterie (100) selon la revendication 12, dans lequel l'élément de délimitation sensible à la pression (33) libère une voie d'écoulement vers la sortie de gaz (30) à travers une section de contournement (11) du boîtier (10) qui contourne une projection verticale de toutes les chambres de réception (21).

14. Dispositif de stockage de batterie (100) selon l'une quelconque des revendications précédentes, dans lequel, dans la section d'évacuation (13) du boîtier (10), en particulier dans un trajet de séparation d'étincelles (36), sont disposés au moins deux éléments de séparation d'étincelles (34) ayant une surface de séparation qui fait saillie dans une section transversale d'écoulement d'une voie d'écoulement vers la sortie de gaz (30).

15. Dispositif de stockage de batterie (100) selon la revendication 14, dans lequel la surface de séparation des éléments de séparation d'étincelles (34) est inclinée selon un angle de moins de 90° par rapport à une direction d'écoulement de la voie d'écoulement vers la sortie de gaz (30).
